# EUROPÄISCHE PATENTANMELDUNG

(11) **EP 1 889 715 A1**
(43) Veröffentlichungstag der Anmeldung: **20.02.2008**
(21) Anmeldenummer: 07113768.1
(22) Anmeldetag: 03.08.2007
(51) Int. Cl.: B32B 25/10, B60R 13/08, B62D 25/24

(54) **Stanzling insbesondere zum dauerhaften Verschließen von Löchern**

(30) Priorität: 15.08.2006 DE 102006038322
(71) Anmelder: tesa AG, 20253 Hamburg (DE)
(72) Erfinder: Böhmer, Audrey, 22527, Hamburg (DE); Lipprandt, Dr. Ute, 22087, Hamburg (DE); Kolmorgen, Frank, Singapore 589631 (SG); von Samson-Himmelstjerna, Matthias, 24558, Henstedt-Ulzburg (DE); Böhmer, Carsten, 22527, Hamburg (DE); Gehringer, Patrick, 77590, Bois le Roi (FR); Zweibarth, Silke, 22609, Hamburg (DE)

(57) **Zusammenfassung**

Stanzling insbesondere zum dauerhaften Verschließen von Löchern insbesondere in Blechen oder in Kunststoffteilen,
mit einer zumindest partiell einseitig selbstklebend ausgerüsteten Basisschicht aus einem hitzebeständigen Träger, wobei die Basisschicht derart geformt ist, dass die Basisschicht die Außenumrandung des zu verschließenden Loches zumindest abschnittsweise überragt, wobei die Basisschicht auf der klebend ausgerüsteten Seite mit einem Block aus einem hitzeaktivierbaren aufschäumbaren Material versehen ist, dessen Fläche größer als die Fläche des zu verschließenden Loches und vorzugsweise kleiner als die Fläche der Basisschicht ist, wobei der Stanzling derart über dem zu verschließenden Loch aufgebracht wird, dass das Loch vom Stanzling vollständig abgedeckt ist.

## Beschreibung

Die vorliegende Erfindung betrifft einen Stanzling insbesondere zum dauerhaften Verschließen von Löchern, die sich vorzugsweise in Blechen oder in Kunststoffteilen befinden, sowie ein Verfahren zum dauerhaften Verschließen von Löchern.

Bei der Fertigung von komplexeren Gebilden aus Metallblechen und/oder Kunststoffen lässt es sich konstruktiv nicht vermeiden, dass in die Bleche oder Kunststoffe Löcher geschnitten werden müssen, um an dahinter liegende Hohlräume, sei es zum Lackieren oder sei es zum Verschweißen, zu gelangen.
Diese Löcher sind nach dem Abschluss des gewünschten Prozesses zumeist nicht mehr erforderlich, oftmals sogar störend, weil durch sie Luft, Luftfeuchtigkeit oder Wasser in das Gebilde eindringen kann, was beispielsweise zu Oxidationsprozessen (Rost) führen kann.
Eine einfache Lösung zur Vermeidung dieser Probleme besteht darin, die Löcher nach Gebrauch wieder zu verschließen.

Gerade bei der Produktion von modernen Fahrzeugen wie Wasserfahrzeugen, Landfahrzeugen (Lastkraftwagen, Automobilen usw.), Luftfahrzeugen, Raumfahrzeugen, Kombinationen hiervon, zum Beispiel Amphibienfahrzeugen, ist es unumgänglich, dass während des Zusammenbaus in vielen einzelnen Teilen aus Blechen oder Kunststoffen unterschiedlich große Löcher erforderlich sind. Üblicherweise liegen die Durchmesser der Löcher zwischen 5 und 50 mm. Viele dieser Löcher müssen im späteren Prozess wieder luft- und insbesondere wasserdicht verschlossen werden, um Korrossionsangriffe zu unterbinden, indem Wasser oder Wasserdampf durch die nicht abgedeckten Löcher in die Karosserie eindringt.
Daneben besteht die Anforderung, durch das Verschließen der Löcher die Geräuschdämmung des Passagierinnenraums erheblich zu verbessern.

Im Folgenden werden die der Erfindung zugrunde liegenden Probleme sowie deren Lösung am Beispiel der Karosserie eines Automobils beschrieben. Dies stellt ausdrücklich keine Beschränkung des Erfindungsgedankens auf diese Anwendung dar. Diese Anwendung ist Teil des technischen Feldes, auf dem die Erfindung besonders vorteilhaft zum Tragen kommt.
Wenn ab jetzt die Verwendung in einer Karosserie genannt ist, liest der Fachmann alle anderen Anwendungsmöglichkeiten außerhalb einer Karosserie mit.

Momentan werden zum Verschließen von Karosserielöchern in der Regel Kunststoffstopfen verwendet, die zum einen im Einzelfall nicht sicher das Loch verschließen und zum anderen vergleichsweise aufwändig und teuer herzustellen sind.
Für jede Lochgröße ist ein spezieller, auf die Lochgröße angepaßter Stopfen erforderlich. Die bedeutet hohen logistischen und verwaltungstechnischen Aufwand für den Abnehmer der Stopfen.
So muss an der Produktionslinie eine große Anzahl von Stopfen verschiedener Größen in jeweils zugeordneten Lagerkästen vorgehalten werden.

Des Weiteren eignen sich zu diesem Zweck Klebebänder, die angepaßt auf die Lochgröße abgelängt oder gestanzt werden. Aber auch Klebebänder werden den im Markt steigenden Anforderungen nicht immer gerecht.

Wie bereits in der WO 2006/053827 A1 beschrieben wird, eignen sich für den speziellen Lochverschluss auch Stanzlinge, die aus einer zumindest partiell einseitig selbstklebend ausgerüsteten Basisschicht aus einem hitzebeständigen Träger bestehen, dessen Fläche größer als die Fläche des zu verschließenden Loches ist und der insbesondere mittig auf der klebend ausgerüsteten Seite mit einem ersten Abschnitt einer hitzeaktivierbaren Klebfolie versehen ist, dessen Fläche größer als die Fläche des zu verschließenden Loches und kleiner als die Fläche der Basisschicht ist. Der Stanzling wird derart über dem zu verschließenden Loch aufgebracht, dass das Loch im Wesentlichen von dem ersten Abschnitt abgedeckt ist. Die beschriebenen hitzeaktivierbaren Klebfolien eignen sich gut zur Abdichtung, sind jedoch vergleichsweise teuer.

Die Möglichkeit, eine Komponente in den Stanzling einzubringen, die bei erhöhter Temperatur wie einem Trocknungsschritt im Lackierbereich das Loch vollständig ausfüllt und/oder abdeckt, indem sie aufschäumt, wird in der WO 2005/097582 A1 beschrieben. Jedoch zeigt sich, dass die ungeschäumte Komponente eine große Expansion aufweisen muss, um einen vollständigen Lochverschluss zu gewährleisten, da die Ausbreitungsrichtung lediglich durch die Haftungsseite zum einseitig selbstklebenden Stanzling begrenzt wird. Durch diesen notwendigen hohen Schäumungsgrad weist der resultierende Lochverschluss nur eine vergleichsweise geringe Materialdichte auf, was sich nachteilig auf die geräuschdämmenden Eigenschaften auswirkt. Zusätzlich zeigt ein derartiger Lochverschluss eine nur geringe Festigkeit hinsichtlich der Schaumhaftung zum Blech, da das Material nur mit dem Lochrand und wenig Blech auf der dem Stanzteil abgewandten Seite in Kontakt kommt. Daraus resultiert eine geringe Durchstoßfestigkeit, welche für den beschriebenen Anwendungsbereich von entscheidender Bedeutung ist.

Eine deutliche Verbesserung kann dadurch erzielt werden, dass ein aufschäumbares Material auf den Stanzling laminiert wird, welches zudem thermoklebende Eigenschaften aufweist, wie zum Beispiel in der EP 1 114 113 A1 für EVA basierte Haftkomponenten beschrieben wird. So kann der überstehende Klebebandrand die Befestigung des thermoklebenden Stanzteils in beliebiger Größe und Form sicherstellen und nach einer Temperaturbehandlung haftet das aufgeschäumte Material zusätzlich selbst durch eine feste Bindung, die es zum Untergrund aufgebaut hat, füllt das Loch aus und dichtet darüber den Verbund ab. Zusätzlich kann das aufschäumbare Material durch ein temperaturstabiles Vlies, zum Beispiel aus Polyesterfasern, verstärkt sein.
Für einen solchen Lochverschluss sind auch Stanzteile aus Klebeband und thermoklebenden Materialien auf Basis von hitzeaktivierbaren Kautschuk- und Synthesekautschukmaterialien geeignet, wie sie zum Beispiel in der DE 100 62 859 A1 sowie der WO 2005/118735 A1 beschrieben sind.

Aufgabe der Erfindung ist es, einen Stanzling zur Verfügung zu stellen, der zum dauerhaften Verschließen von Löchern insbesondere in Blechen oder in Kunststoffteilen von Automobilkarosserien geeignet ist, der besagte Löcher derart verschließt, dass ein Durchtritt von Feuchtigkeit ausgeschlossen ist, der die Geräuschdämmung verbessert und der die Löcher auch bei Steinschlag am Unterboden beziehungsweise bei mechanischen Beanspruchungen im Innenraum, insbesondere im Bodenbereich, sicher verschließt.

Gelöst wird diese Aufgabe durch einen Stanzling, wie er im Hauptanspruch niedergelegt ist. Gegenstand der Unteransprüche sind vorteilhafte Weiterentwicklungen des Erfindungsgegenstandes sowie ein Verfahren zum dauerhaften Verschließen von Löchern.

Demgemäß betrifft die Erfindung einen Stanzling insbesondere zum dauerhaften Verschließen von Löchern insbesondere in Blechen oder in Kunststoffteilen, mit einer zumindest partiell einseitig selbstklebend ausgerüsteten Basisschicht aus einem hitzebeständigen Träger, wobei die Basisschicht derart geformt ist, dass die Basisschicht die Außenumrandung des zu verschließenden Loches zumindest abschnittsweise überragt, und wobei die Basisschicht auf der klebend ausgerüsteten Seite mit einem Block aus einem hitzeaktivierbaren aufschäumbaren Material versehen ist.
Die Fläche des Blocks ist größer als die Fläche des zu verschließenden Loches und vorzugsweise kleiner als die Fläche der Basisschicht, wobei der Stanzling derart über dem zu verschließenden Loch aufgebracht wird, dass das Loch vom Stanzling vollständig abgedeckt ist.

Die Basisschicht muss nicht rundum umlaufend den Block aus dem hitzeaktivierbaren aufschäumbaren Material überdecken. Gemäß einer vorteilhaften Ausführungsform ist dies aber der Fall. Bei einer rechteckigen Grundfläche der Basisschicht beispielsweise kann die Basisschicht den Block lediglich in zwei Abschnitten überragen. Selbst ein Streifen der Basisschicht, der schmaler als der Block aus dem hitzeaktivierbaren aufschäumbaren Material ist, kann die Funktion des sicheren Positionierens des Stanzlings übernehmen.
Weiter vorzugsweise ist die Fläche der Basisschicht größer als die Fläche des ungeschäumten Blocks.

In einer vorteilhaften Ausgestaltung der Erfindung ist zwischen der Basisschicht und dem Block des hitzeaktivierbaren aufschäumbaren Materials ein schichtförmiger Körper vorhanden, der besonders vorteilhaft aus Metall, aus einer Metallfolie, zum Beispiel Aluminiumfolie, aus einer Metall enthaltenden Folie oder auch aus steifen Kunststofffolien, wie zum Beispiel PET-Folien, besteht. Vorzugsweise ist der Körper ein- oder beidseitig selbstklebend ausgerüstet, und zwar vorteilhaft mit den im Folgenden erläuterten Klebemassen.
Die Folien weisen dabei vorzugsweise eine Dicke zwischen 30 und 500 µm auf, die Metallfolien bis 3 mm.
Der schichtförmige Körper weist eine Festigkeit auf, um die Stabilität des gesamten Stanzlings zu erhöhen. Insbesondere die Durchstoßfestigkeit, welche bestimmt wird, indem ein Loch mit einem Stanzling verschlossen und gezielt durchgestoßen wird.
Die Methodik beruht auf der Verwendung einer Zugprüfmaschine, in welche in den oberen Kraftaufnehmer ein Dorn eingespannt wird, der mit konstanter Geschwindigkeit (300 mm/min) auf ein horizontal positioniertes Loch in einem Blech, welches wiederum mit dem Stanzteil verschlossen ist, zubewegt. Als Loch wird dabei ein kreisrunder Ausschnitt mit 40 mm im Durchmesser gewählt. Das Stahlblech weist eine Stärke von 1 mm auf und wird auf einem Ring platziert, so dass der Dorn beim Eindrücken des Lochverschlusses bis 30 mm durch das Loch fahren kann. Die Dornspitze ist abgerundet und stellt den Kopf einer Flachrundschraube nach ISO 8677, mit einem Durchmesser von 20 mm und einer Bogenhöhe von 3 mm, dar, welcher an einen Aufnehmer geschweißt worden ist. Die Kraft, die notwendig ist, um den Dorn 30 mm durch das Loch zu drücken, wird gemessen. Bei sehr guter Blechhaftung korreliert dieser Wert mit den Zugdehnungseigenschaften des schichtförmigen Körpers in Längs- und Querrichtung.
Schichtförmige Körper, welche zur Verstärkung des Stanzlings eingesetzt werden können, weisen gemäß einer vorteilhaften Ausführungsform der Erfindung Durchstoßfestigkeiten von 200 bis 2000 N auf.

Bevorzugt ist, wenn der Stanzling einen symmetrischen Aufbau aufweist, wenn insbesondere die Basisschicht, der Block sowie der gegebenenfalls vorhandene Körper konzentrisch angeordnet sind und ganz insbesondere wenn dieser Stanzling konzentrisch über dem zu verschließenden Loch aufgebracht ist.

Vorteilhaft entsprechen die Konturen der Basisschicht, des Blocks sowie des gegebenenfalls vorhandenen Körpers der Kontur des zu verschließenden Loches. Dies gilt besonders für den Block.
Auf diese Weise ergibt sich ein symmetrischer Überstand der einzelnen Schichten des Stanzlings.

Der Träger, der in einer vorteilhaften Weiterbildung der Erfindung aus einer Aluminiumfolie, einem textilen Träger oder einer Kunststofffolie (beispielsweise PVC, PP, PET, PU) besteht, weist vorzugsweise eine Dicke auf
- zwischen 30 und 120 µm bei der Aluminiumfolie,
- zwischen 100 und 300 µm bei einem textilen Träger und
- zwischen 30 und 300 µm bei einer Kunststofffolie.

Als Träger für den Stanzling werden in einer besonders vorteilhaften Weiterführung der Erfindung Baumwollgewebe verwendet, die insbesondere eine mesh-Zahl von 140 bis 160, bevorzugt 148 (bedeutet eine Fadenzahl in Kette (warp) von 74 und in Schuss (weft) von 74) aufweisen.
Weiter vorzugsweise betragen die Schusszahl 70 bis 80 und/oder die Kettenzahl 70 bis 80.

Als Trägermaterial für den Stanzling können des Weiteren alle bekannten textilen Träger wie Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind. Ebenfalls können Abstandsgewebe und -gewirke mit Kaschierung verwendet werden.
Als Ausgangsmaterialien für den textilen Träger sind insbesondere Polyester-, Polypropylen-, Viskose-, Zellwoll- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden. Wichtig ist, dass die eingesetzten Materialien die erforderliche Hitzebeständigkeit aufweisen.

Als Klebemassen auf dem Träger können prinzipiell verschiedene Polymersysteme gewählt werden, wobei sich besonders Natur- oder Synthesekautschuk- sowie Acrylatsysteme als vorteilhaft erwiesen haben, wenn ihre Klebeigenschaften und Temperaturbeständigkeiten den Anforderungen entsprechen. Weiter vorzugsweise beträgt die Klebkraft auf Stahl mindestens 5 N/25 mm.
Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Dann kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.
Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen.
Als klebrig machende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Das hitzeaktivierbare aufschäumbare Material des ungeschäumten Blocks besteht weiter vorzugsweise aus vulkanisierbarem Kautschukmaterial oder besonders bevorzugt aus einem EVA-Material und weist eine Dicke auf von 0,5 bis 3 mm.

Letzteres besteht aus einer Haft- und einer Bewehrungskomponente. Die Haftkomponente setzt sich zusammen aus EVA-Maleinsäureanhydrid-Copolymer, gegebenenfalls modifiziert mit PE, PP und modifiziertem EVA, welches Epoxidfunktionen für den Vernetzungsprozess trägt. Die Bewehrungskomponente sind bevorzugt Polyetherblockester und Polyetherblockamine, wahlweise als Gemisch mit Ethlyenpropylencopolymer, wobei letzteres auch durch EPDM ersetzt sein kann.
Der Vinylacetatgehalt im EVA liegt vorteilhaft bei ungefähr 5 bis 40 Gew.-%. Das aufgepfropfte Maleinsäureanhydrid geht mit ungefähr 0,4 bis 12 Gew.-% ein. Der Rest sind weitere Polyolefinkomponenten, auch Terpolymere, Füllstoffe wie Kreide, Bariumsulfat, Farbstoffe, hitzeaktivierbare Treibmittel sowie weitere Zusätze wie Harze, Flammhemmstoffe, Verstärkungsmittel, Fungizide, Antioxidantien, Licht- und Wärmestabilisatoren. Das EVA ist vorzugsweise zu einer Matrix extrudiert.

Das vulkanisierbare Kautschukmaterial besteht vorteilhaft aus einer reaktiven Zusammensetzung auf Basis von natürlichen und/oder synthetischen Kautschuken, also Doppelbindung enthaltende Co- beziehungsweise Blockcopolymere und Terpolymere auf Basis von Butylen, Isobutylen, Ethylen, Propylen, Acrylnitril, Butadien, Isopren, Cyclopentadien, Styrol und deren Kombination mit halogenierten Monomeren. Es können Flüssig- und Festkautschuke sowie Elastomere eingesetzt werden, welche mit Zusatzstoffen wie Füllstoffen, Treibmittel, Vulkanisationsmittel, Vulkanisationsbeschleuniger, Katalysatoren, Alterungsschutzmittel, Rheologiehilfsmittel versetzt werden. Flüssigkautschuke sind insbesondere telechele Polymerketten, welche endständig funktionalisiert sind. Auch Haftvermittler, insbesondere Organosilane, können in der Rezeptur eingebracht werden.

Eine typische Größe für den ungeschäumten Block, mit dem viele der kleineren Löcher verschlossen werden können, stellt eine Scheibe mit einem Durchmesser von 10 bis 60 mm, insbesondere 30 bis 40 mm dar.

Durch die chemische Vernetzungsreaktion (auf Basis von Epoxiden und Maleinsäureanhydridblöcken beziehungsweise Vulkanisationsmitteln und Organosilane) innerhalb des hitzeaktivierbaren aufschäumbaren Materials bei erhöhter Temperatur werden große Festigkeiten zwischen dem Material und der zu verklebenden Oberfläche erzielt und eine hohe innere Festigkeit des Produktes erreicht.

Die hitzeaktivierbaren aufschäumbaren Materialien zeichnen sich durch eine Reihe von Vorteilen aus:
- Sie besitzen eine hohe Kohäsion und Elastizität bei Raumtemperatur.
- Sie zeigen eine hohe Adhäsion auf den üblichen Untergründen im Automobilbau.

Insbesondere vorteilhaft für den erfindungsgemäßen Gedanken ist ein foggingfreier Stanzling, umfassend einen foggingfreien Träger, auf den zumindest einseitig eine foggingfreie, druckempfindliche Klebemasse aufgetragen ist, sowie einen foggingfreien Block aus dem hitzeaktivierbaren aufschäumbaren Material.

Der Stanzling wird mit der Karosserie dauerhaft verbunden, indem auf den Stanzling kurzzeitig hohe Temperaturen einwirken, die zur Aktivierung des hitzeaktivierbaren aufschäumbaren Materials führen. Als besonders vorteilhaft haben sich Temperaturen über 120 °C und unter 200 °C erwiesen, die für dabei für ungefähr 20 min einwirken sollten.
Das Verfahren zum Verschließen eines Loches insbesondere in einer Karosserie mit einem erfindungsgemäßen Stanzling ist durch folgende Schritte gekennzeichnet:
- Aufbringen des Stanzlings auf dem zu verschließenden Loch derart, dass das Loch vollständig von dem Stanzling, insbesondere von dem Block abgedeckt ist
- Einwirken von Temperaturen von 120 °C bis 200 °C für ungefähr 20 min auf den Stanzling, so dass der erste Abschnitt des hitzeaktivierbaren aufschäumbaren Materials aufschäumt und dadurch das Loch ausfüllt und insbesondere die Lochkante vollständig umschließt

Vorzugsweise erfolgt die Aufschäumung des Stanzlings durch Wärmezufuhr während des üblichen Veredlungsprozesses der Rohkarosserie, insbesondere während der Lackier-, Unterbodenschutz- oder KTL-Trocknung. Auf diese Weise ist kein zusätzlicher Arbeitsgang erforderlich.
Aufgrund der erforderlichen Erwärmung der Karosserie während der besagten Trocknungsprozesse ist genügend Energie vorhanden, die Schaumkörper aufzuschäumen.
Alternativ ist eine Aufschäumung durch eine lokale Energiezufuhr durch Wärme- oder Infrarotstrahler möglich.

Der erfindungsgemäße Stanzling ist besonders bei erhöhter mechanischer Beanspruchung den aus dem Stand der Technik bekannten Lösungen überlegen. Das gleiche gilt bei Betrachtung der Geräuschdämpfung. Die Geräuschdämpfung und die Festigkeit werden durch die Kombination Basisschicht/hitzeaktivierbares aufschäumbares Material/schichtförmiger Körper massiv verbessert.
Des Weiteren kann eine einzige Ausführungsform des Stanzlings eine Vielzahl von Löchern unterschiedlicher Größe abdecken.

Der Stanzling zeichnet sich aus durch:
- eine sehr hohe Belastbarkeit/Durchstoßfestigkeit
- sehr gute Abdichtung gegen Feuchtigkeit/Feuchtigkeitsbarriere
- gute Abdichtung gegen Geräusche/Lärmdämpfung
- einfache und kostengünstige Möglichkeit durch Einkaschieren von schweren Materialien, zum Beispiel Metallplättchen, um eine zusätzliche hohe Festigkeit des Verbundes und eine Geräuschdämpfung zu erzielen

Zudem umgibt der aufgeschäumte Stanzling die empfindliche Lochkante, deren dünne Lackschicht eine Schwachstelle im Korrosionsschutz darstellt, vom geschäumten Material umschlossen und somit besonders geschützt.

Im Folgenden soll anhand zweier Figuren der Stanzling zum dauerhaften Verschließen von Löchern insbesondere in Blechen oder in Kunststoffteilen von Automobilkarosserien näher erläutert werden, ohne in irgendeiner Form einschränkend wirken zu sollen.

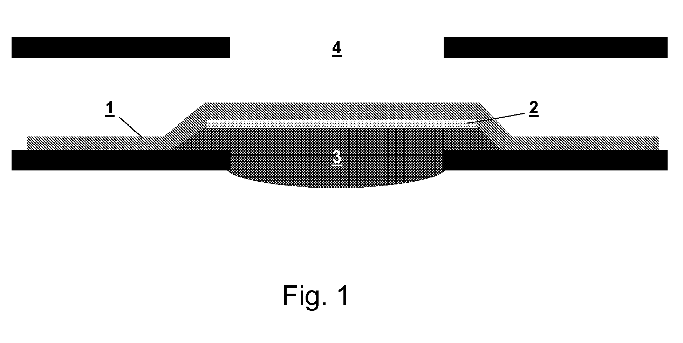

Es zeigen
- Figur 1: ein Loch in einer Karosserie, das es zu verschließen gilt, sowie den Zustand, nachdem durch Wärmeeinwirkung das zu verschließende Loch verschlossen ist, und
- Figur 2: diverse Ausführungsformen des Stanzlings.

In der Karosserie 5 ist ein Loch 4 konstruktiv bedingt vorhanden, das es zu verschließen gilt.

Hierzu wird ein Stanzling mit einer Basisschicht 1, die einen textilen Träger aus Gewebe oder eine Kunststofffolie als Träger aufweist, welcher mit einer Klebeschicht ausgerüstet ist, derart auf dem Loch 4 fixiert, dass das Loch 4 vollständig vom Stanzling abgedeckt ist.

Die Fläche des Stanzlings ist größer als die Fläche des zu verschließenden Loches 4.

Mittig auf der Basisschicht 1, und zwar auf der klebend ausgerüsteten Seite, befindet sich ein schichtförmiger Körper 2 aus Metall, aus einer Metallfolie oder aus einer steifen Kunststofffolie, hier aus einer Metallfolie.

Auf dem Körper 2 ist ein Block 3 eines hitzeaktivierbaren aufschäumbaren Materials vorhanden, dessen Fläche größer als die Fläche des zu verschließenden Loches 4 und kleiner als die Fläche der Basisschicht 1, aber größer als beziehungsweise gleich groß wie der schichtförmige Körper 2 ist.

Der Stanzling wird mit der Karosserie 5 dauerhaft verbunden, indem auf den Stanzling kurzzeitig hohe Temperaturen einwirken, die zur Aktivierung des Blocks aus dem hitzeaktivierbaren aufschäumbaren Material 3 führen.

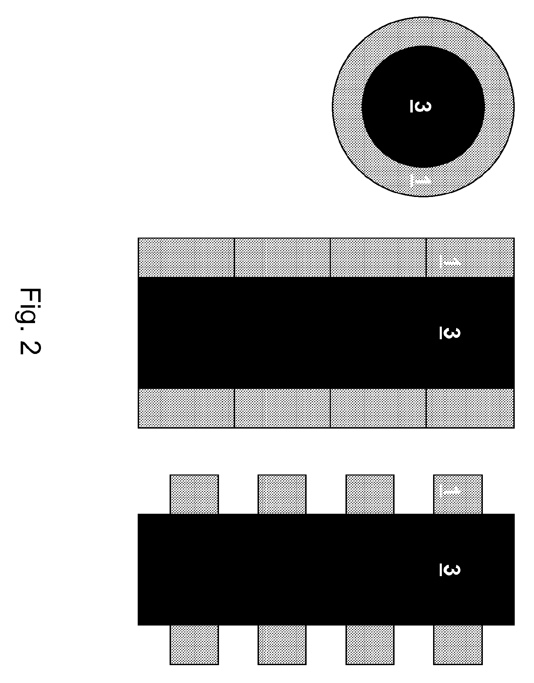

Hinsichtlich des Produktaufbaus sind zudem noch weitere Geometrien denkbar, wie in Figur 2 gezeigt, so dass das Basismaterial 1 nicht rundum umlaufend das hitzeaktivierbare aufschäumbare Material überdecken muss, sondern auch bei rechteckigen Mustern nur in zwei Dimensionen einen Überstand in Breite des hitzeaktivierbaren aufschäumbaren Materials aufweist. Selbst ein Basismaterialstreifen, welcher schmaler als das hitzeaktivierbare aufschäumbare Material ist, kann die Funktion des Positionierens übernehmen.

## Patentansprüche

1. Stanzling insbesondere zum dauerhaften Verschließen von Löchern insbesondere in Blechen oder in Kunststoffteilen,
mit einer zumindest partiell einseitig selbstklebend ausgerüsteten Basisschicht aus einem hitzebeständigen Träger, wobei die Basisschicht derart geformt ist, dass die Basisschicht die Außenumrandung des zu verschließenden Loches zumindest abschnittsweise überragt, wobei die Basisschicht auf der klebend ausgerüsteten Seite mit einem Block aus einem hitzeaktivierbaren aufschäumbaren Material versehen ist, dessen Fläche größer als die Fläche des zu verschließenden Loches und vorzugsweise kleiner als die Fläche der Basisschicht ist, wobei der Stanzling derart über dem zu verschließenden Loch aufgebracht wird, dass das Loch vom Stanzling vollständig abgedeckt ist.

2. Stanzling nach Anspruch 1, **dadurch gekennzeichnet, dass**
zwischen der Basisschicht und dem Block des hitzeaktivierbaren aufschäumbaren Materials ein schichtförmiger Körper vorhanden ist.

3. Stanzling nach Anspruch 2, **dadurch gekennzeichnet, dass**
der schichtförmige Körper aus Metall, aus einer Metallfolie, zum Beispiel aus einer Aluminiumfolie, aus einer Metall enthaltenden Folie oder aus steifen Kunststofffolien, wie zum Beispiel PET Folien, besteht und bevorzugt ein- oder beidseitig selbstklebend ausgerüstet ist.

4. Stanzling nach zumindest einem der Ansprüche 1 bis 3, **dadurch gekennzeichnet, dass** die Basisschicht die Außenumrandung des Loches an jeder Stelle überragt.

5. Stanzling nach zumindest einem der vorherigen Ansprüche, **dadurch gekennzeichnet, dass** die Fläche der Basisschicht größer als die Fläche des Blocks ist und insbesondere den Block an jeder Stelle überragt.

6. Stanzling nach zumindest einem der vorherigen Ansprüche, **dadurch gekennzeichnet, dass** der Stanzling einen symmetrischen Aufbau aufweist und/oder die Basisschicht, der Block sowie der gegebenenfalls vorhandene Körper konzentrisch angeordnet sind, insbesondere wenn der Stanzling konzentrisch über dem zu verschließenden Loch aufgebracht ist.

7. Stanzling nach zumindest einem der vorherigen Ansprüche, **dadurch gekennzeichnet, dass** die Konturen der Basisschicht, des Blocks sowie des gegebenenfalls vorhandenen Körpers der Kontur des zu verschließenden Loches entsprechen.

8. Stanzling nach zumindest einem der vorherigen Ansprüche, **dadurch gekennzeichnet, dass** als Trägermaterial eine Aluminiumfolie, ein textiler Träger oder eine Kunststofffolie wie PVC, PP, PET, PU verwendet werden, insbesondere ein Baumwollgewebe, das eine Schusszahl von 70 bis 80 und/oder eine Kettenzahl von 70 bis 80 aufweist.

9. Stanzling nach zumindest einem der vorherigen Ansprüche, **dadurch gekennzeichnet, dass** das hitzeaktivierbare aufschäumbare Material des ungeschäumten Blocks aus vulkanisierbarem Kautschukmaterial oder bevorzugt aus einem EVA-Material besteht und/oder eine Dicke von 0,5 bis 3 mm aufweist.

10. Verfahren zum Verschließen eines Loches insbesondere in einer Karosserie mit einem Stanzling nach zumindest einem der vorherigen Ansprüche, **gekennzeichnet durch** folgende Schritte:
Aufbringen des Stanzlings auf dem zu verschließenden Loch derart, dass das Loch vollständig von dem Stanzling, insbesondere von dem Block abgedeckt ist,
Einwirken von Temperaturen von 120 °C bis 200 °C für ungefähr 20 min auf den Stanzling, so dass der Block aus dem hitzeaktivierbaren aufschäumbaren Material aufschäumt und **dadurch** das Loch ausfüllt und insbesondere die Lochkante vollständig umschließt.

11. Loch insbesondere in einer Karosserie mit einem Stanzling nach zumindest einem der vorherigen Ansprüche.
